# EUROPEAN PATENT APPLICATION

(11) **EP 4 099 621 A2**
(43) Date of publication of application: **07.12.2022**
(21) Application number: 22172951.0
(22) Date of filing: 12.05.2022
(51) Int. Cl.: H04L 9/40

(54) **ARTIFICIAL INTELLIGENCE CYBER IDENTITY CLASSIFICATION**

(30) Priority: 01.06.2021 US 202163202225 P
(71) Applicant: Cytwist Ltd., 609200 Ramat Gan (IL)
(72) Inventor: Korakin, Yosef, 609200 Ramat Gan (IL)
(74) Representative: Cipriani, Guido

(57) **Abstract**

There is provided a method for artificial intelligence based detection of cyber attackers, the method may include (a) applying the artificial intelligence process to generate communication signatures for multiple virtual users of one or more networks of interest; (b) comparing the communication signatures for multiple virtual users to each other; (c) finding that communication signatures of a set of virtual users of the multiple virtual users are substantially the same; and (d) determining that the set of virtual users represent to a suspected or an actual cyber attacker.

## Description

The present invention relates to an artificial intelligence cyber identity classification.

### BACKGROUND

In contrary to legitimate network user, cyber attackers usually attempt to conceal their identity. In many cases it is very hard to identity such cyber attackers.

There is a growing need to identify cyber attackers.

### SUMMARY

There may be provided a method for artificial intelligence based detection of cyber attackers, the method may include (a) applying the artificial intelligence process to generate communication signatures for multiple virtual users of one or more networks of interest; (b) comparing the communication signatures for multiple virtual users to each other; (c) finding that communication signatures of a set of virtual users of the multiple virtual users are substantially the same; and (d) determining that the set of virtual users represent to a suspected or an actual cyber attacker.

There may be provided a non-transitory computer readable medium that stores instructions for artificial intelligence based detection of cyber attackers, the non-transitory computer readable medium may store instructions for (a) applying the artificial intelligence process to generate communication signatures for multiple virtual users of one or more networks of interest; (b) comparing the communication signatures for multiple virtual users to each other; (c) finding that communication signatures of a set of virtual users of the multiple virtual users are substantially the same; and (d) determining that the set of virtual users represent to a suspected or an actual cyber attacker.

### BRIEF DESCRIPTION OF THE DRAWINGS

The embodiments of the disclosure will be understood and appreciated more fully from the following detailed description, taken in conjunction with the drawings in which:
FIG. 1 illustrates an example of a prior art IP header;
FIG. 2 illustrates an example of a method;
FIG. 3 illustrates an example of a computerized system implementing an artificial intelligence process and of its environment.

### DESCRIPTION OF EXAMPLE EMBODIMENTS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a device or system capable of executing the method and/or to a non-transitory computer readable medium that stores instructions for executing the method.

Any reference in the specification to a system or device should be applied mutatis mutandis to a method that may be executed by the system, and/or may be applied mutatis mutandis to non-transitory computer readable medium that stores instructions executable by the system.

Any reference in the specification to a non-transitory computer readable medium should be applied mutatis mutandis to a device or system capable of executing instructions stored in the non-transitory computer readable medium and/or may be applied mutatis mutandis to a method for executing the instructions.

Any combination of any module or unit listed in any of the figures, any part of the specification and/or any claims may be provided.

Any one of the entities mentioned below may be implemented in hardware and/or code, instructions and/or commands stored in a non-transitory computer readable medium, may be included in a vehicle, outside a vehicle, in a mobile device, in a server, and the like.

The specification and/or drawings may refer to a processor. The processor may be a processing circuitry. The processing circuitry may be implemented as a central processing unit (CPU), and/or one or more other integrated circuits such as application-specific integrated circuits (ASICs), field programmable gate arrays (FPGAs), full-custom integrated circuits, etc., or a combination of such integrated circuits.

Any combination of any steps of any method illustrated in the specification and/or drawings may be provided.

Any combination of any subject matter of any of claims may be provided.

Any combinations of systems, units, components, processors, sensors, illustrated in the specification and/or drawings may be provided.

There may be provided a method, a system and a non-transitory computer readable medium for detecting cyber attackers by applying an artificial intelligence process to generate a communication signature for each of multiple virtual users, and when finding that communication signatures of different virtual users are substantially the same - declaring the different virtual users as belonging to a suspected or actual cyber attacker.

Substantially the same means that there may be up to certain differences. What amount to substantially the same may be predefined, may be learnt during the training (supervised or unsupervised) of the artificial intelligence process, may be defined and/or updated during training and/or during inference - for example based on feedback (have at least a predefined number of fields having values within a same range - IPv4 address having the same most significant byte, Mac address, routing address, same sub-networks, same port address same range of addresses (the same range of addresses may be based on firewall rules, and/or may be provided by rom firewalls or other entities) to declarations made by the artificial intelligence process.

The declaring may be followed by responding - for example generating an alert, attempting to verify whether the different virtual users belong to a suspected or actual cyber attacker, performing a defensive or offensive cyber operation - for example blocking the different virtual users, spoofing the different virtual users, disrupt and thwarting, and the like.

The communication signatures are generated by the artificial intelligence process based on communication parameters related to communications related to different virtual users, the communication utilizes one or more networks of interest.

The artificial intelligence process may be trained with communication parameters of traffic over one or more test communication networks. A test communication network may be a network of interest - but may differ from the network of interest. Training - can generate profiles of virtual users - including additional information (for example typing rate).

The training may be made on traffic that is known to be legitimate traffic (not from or to a cyber attacker) or that is assumed to be mostly legitimate (as most of the communication over a network may be assumed to be related to legitimate users).

The communication parameters may be any one of timing information, delays, communication patterns, addresses, any combination of communication protocol header and/or trailed fields, error ratio, re-transmit events, disaster recovery, communication stacks, and the like. The communication patterns may be an input to the artificial intelligence process or may be learnt by the artificial intelligence process.

The communication parameter may relate to one or more communication protocols - for example a single communication protocol, an entire set of communication protocols, at least a part of a communication protocol stack, and the like. An example of a communication protocol may be the Internet Protocol (IP) communication- but other protocols may be provided. An example of two communication protocols may be the TCP/IP.

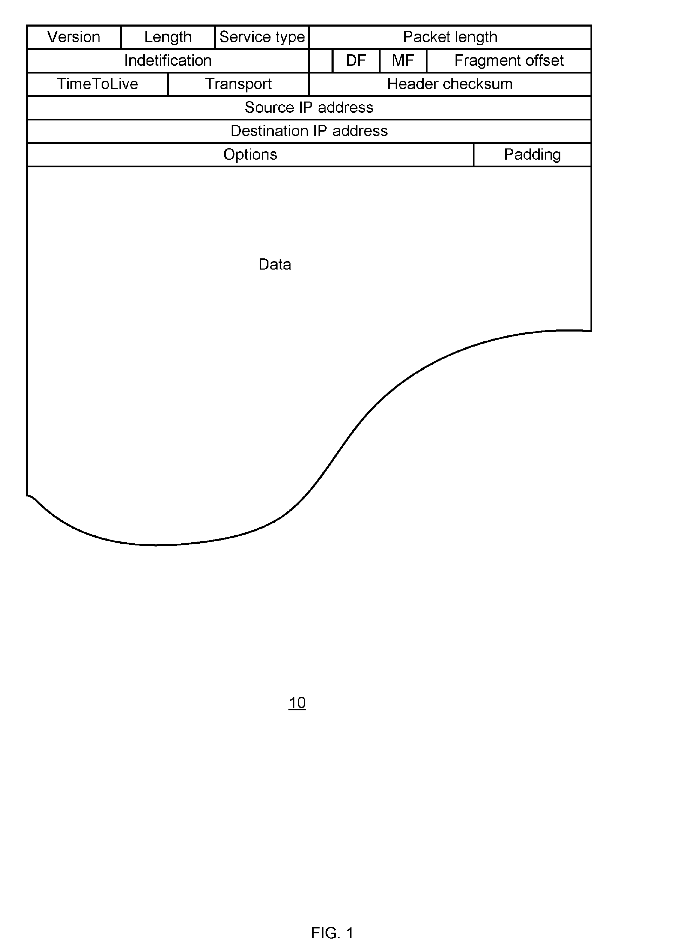

For example - the communication parameters may include an IPvP4 or IPvP6 header information, including the IP addresses of the source and destination, plus additional variables (destination application, router routing table ) that are requires to route the packets, IP network packets behavior (such as delay between packets), and the data itself (such as text patterns - format of writing text by person ).Some parameters are illustrated in header 10 of figure 1.

The artificial intelligence process may include any process - for example a machine learning process, a deep machine learning process, and/or a process that differs from machine learning.

The artificial intelligence process may be executed by a computerized entity located within a firewall, outside a firewall, in communication with the firewall, within the one or more networks of interest, outside any of the one or more networks of interest, and the like.

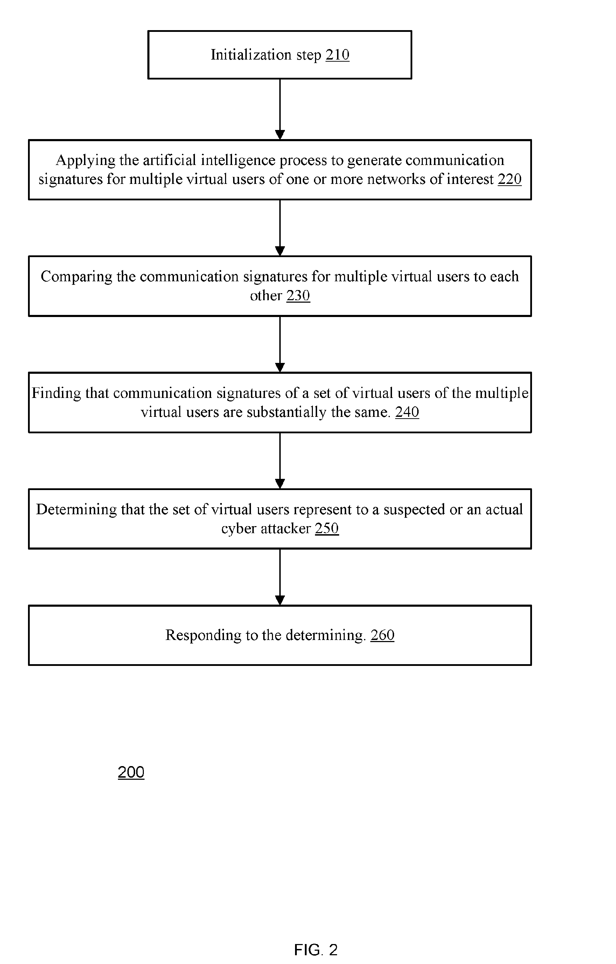

Figure 2 illustrates an example of method 200 for artificial intelligence based detection of cyber attackers.

Method 200 may start by an initialization step 210.

Step 210 may include training the training the artificial intelligence process.

The training may include training the artificial intelligence network with communication parameters of traffic over one or more test communication networks.

At least some of the one or more test communication networks differ from the one or more networks of interest. At least some of the one or more test communication networks are some of the one or more networks of interest.

The training may be executed on traffic that is known to be legitimate or is assumed to be legitimate.

Initialization step 210 may be followed by step 220 of applying the artificial intelligence process to generate communication signatures for multiple virtual users of one or more networks of interest.

Step 220 may be followed by step 230 of comparing the communication signatures for multiple virtual users to each other.

Step 230 may be followed by step 240 of finding that communication signatures of a set of virtual users of the multiple virtual users are substantially the same.

Step 240 may include two or more sets, wherein the members of each set are substantially equal. In this case steps 250 and 260 are applicable to each set.

Step 240 may be followed by step 250 of determining that the set of virtual users represent to a suspected or an actual cyber attacker.

Step 250 may be followed by step 260 of responding to the determining.

Step 260 may include at least one out of (a) generating an alert (to a user, to a security administrator, to a firewall, to a cyber mechanism, and the like, (b) attempting to verify whether virtual users of the set represent the suspected or the actual cyber attacker, (c) performing a defensive cyber operation, or (d) performing an active cyber operation.

The communication parameters relate to one or more communication protocols.

The communication parameters may relate to at least two communication protocols of a communication protocol stack.

The communication parameters may include at least two out of communication protocol header parameters.

The communication parameters may include at least some (or at least a majority of, or all) out of an internet protocol (IP) source and destination addresses, one or more routing related variables, IP network packets behavior, and one or more payload data parameter.

The artificial intelligence process may also be responsive to additional information such as but not limited to additional virtual user information such as at least one out of virtual users permissions, privileges, active directory, administrative information, financial information, work attendance, procurement, legal information, writing patterns, . Thus - the artificial intelligence process may search for similarities based on the additional information and the communication parameters.

The artificial intelligence process may generate additional information signatures and/or a combined communication and additional information signatures.

The artificial intelligence process may also be responsive to cyber information such as information acquired from at least one out of Firewall, IPS, EPS, EDR's, XDR, WAF's, SIEM's etc' logs, or alerts.

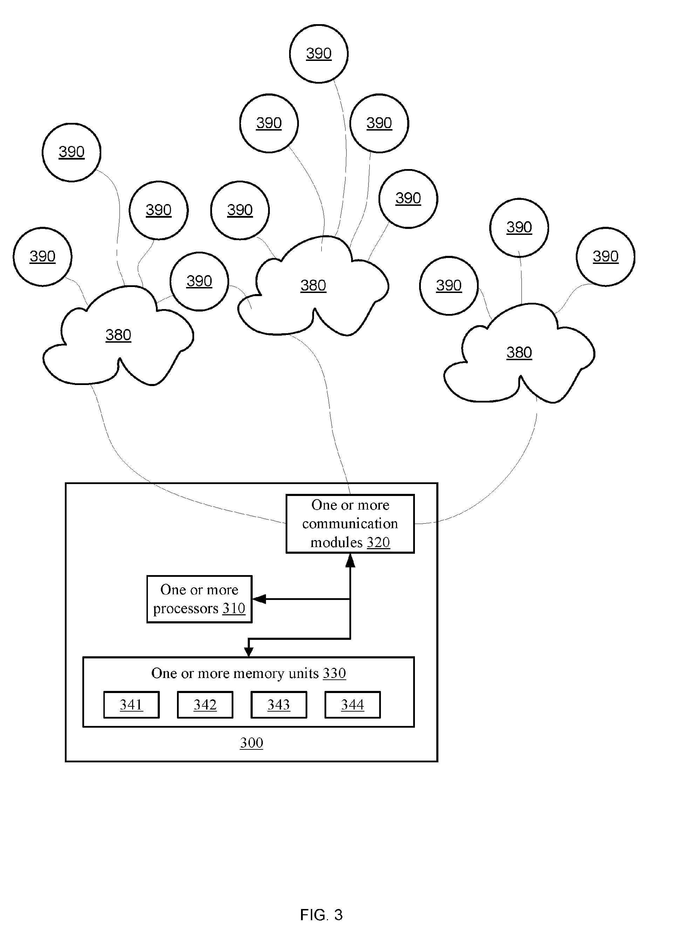

Figure 3 illustrates an example of a computerized system 300 and its environment.

The computerized system 300 may be a computer, multiple computers, a server, multiple servers, a part of a server, one or more desktop computers, one or more laptop computers, a computerized could environment, may be located within a computerized cloud environment, a data center, and the like.

Computerized system 300 may be configured to execute method 200.

Computerized system 300 may include one or more communication modules 320, one or more processors 310 and one or more memory units 330.

The one or more communication modules 320 are configured to obtain communication related information about communications of multiple virtual users (denoted 390) of one or more networks of interest (denoted 380). A communication module may be a sniffer, a communication monitor, a tracker, a firewall, and the like.

The one or more processors 310 configured to:
a. Implement artificial intelligence process to generate communication signatures for multiple virtual users of one or more networks of interest.
b. Compare the communication signatures for multiple virtual users to each other.
c. Finding that communication signatures of a set of virtual users of the multiple virtual users are substantially the same. Substantially the same may be equal except to a predefined deviation - the predefined deviation may be determined in any manner - for example up to a deviation of 1, 2, 5, 10 percent and the like.
d. Determining that the set of virtual users represent to a suspected or an actual cyber attacker.
e. Participate in responding to the determining. The participation may include performing part of the response, executing the response, triggering the response, controlling an execution of the response, requesting the response, suggesting the response, instructing the response. The response may include at least one out of (a) generating an alert (to a user, to a security administrator, to a firewall, to a cyber mechanism, and the like, (b) attempting to verify whether virtual users of the set represent the suspected or the actual cyber attacker, (c) performing a defensive cyber operation, or (d) performing an active cyber operation.

The one or more memory units 330 are configured to store information and/or metadata such as communication related information 341, communication signatures of multiple virtual users 342, one or more response rule 343, artificial intelligence process representation 344 (such as an artificial intelligence process model), and the like.

In the foregoing specification, the invention has been described with reference to specific examples of embodiments of the invention. It will, however, be evident that various modifications and changes may be made therein without departing from the broader spirit and scope of the invention as set forth in the appended claims.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures may be implemented which achieve the same functionality.

Any arrangement of components to achieve the same functionality is effectively "associated" such that the desired functionality is achieved. Hence, any two components herein combined to achieve a particular functionality may be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

It is appreciated that various features of the embodiments of the disclosure which are, for clarity, described in the contexts of separate embodiments may also be provided in combination in a single embodiment. Conversely, various features of the embodiments of the disclosure which are, for brevity, described in the context of a single embodiment may also be provided separately or in any suitable sub-combination.

It will be appreciated by persons skilled in the art that the embodiments of the disclosure are not limited by what has been particularly shown and described hereinabove. Rather the scope of the embodiments of the disclosure is defined by the appended claims and equivalents thereof.

## Claims

1. A method for artificial intelligence based detection of cyber attackers, the method comprises:
applying the artificial intelligence process to generate communication signatures for multiple virtual users of one or more networks of interest;
comparing the communication signatures for multiple virtual users to each other;
finding that communication signatures of a set of virtual users of the multiple virtual users are substantially the same; and
determining that the set of virtual users represent to a suspected or an actual cyber attacker.

2. The method according to claim 1 further comprising responding to the determining by generating an alert.

3. The method according to claim 1 further comprising responding to the determining by attempting to verify whether virtual users of the set represent the suspected or the actual cyber attacker.

4. The method according to claim 1 further comprising responding to the determining by performing a defensive cyber operation.

5. The method according to claim 1 further comprising responding to the determining by performing an active cyber operation.

6. The method according to claim 1 comprising training the artificial intelligence process with communication parameters of traffic over one or more test communication networks.

7. The method according to claim 6 wherein at least some of the one or more test communication networks differ from the one or more networks of interest.

8. The method according to claim 6 wherein at least some of the one or more test communication networks are some of the one or more networks of interest.

9. The method according to claim 6 wherein the training is executed on traffic that is known to be legitimate or is assumed to be legitimate.

10. The method according to claim 1 wherein the communication parameters relate to one or more communication protocols.

11. The method according to claim 1 wherein the communication parameters relate to at least two communication protocols of a communication protocol stack.

12. The method according to claim 1 wherein the communication parameters comprises at least two out of communication protocol header parameters.

13. The method according to claim 1 wherein the communication parameters comprises at least some out of an internet protocol (IP) source and destination addresses, one or more routing related variables, IP network packets behavior, and one or more payload data parameter.

14. The method according to claim 1 wherein the communication parameters comprises at least a majority of an internet protocol (IP) source and destination addresses, one or more routing related variables, IP network packets behavior, and one or more payload data parameter.

15. The method according to claim 1 wherein the artificial intelligence process is a deep learning process.

16. A non-transitory computer readable medium for artificial intelligence based detection of cyber attackers, the non-transitory computer readable medium stores instructions for:
applying the artificial intelligence process to generate communication signatures for multiple virtual users of one or more networks of interest;
comparing the communication signatures for multiple virtual users to each other;
finding that communication signatures of a set of virtual users of the multiple virtual users are substantially the same; and
determining that the set of virtual users represent to a suspected or an actual cyber attacker.

17. The non-transitory computer readable medium according to claim 16 that stores instructions for responding to the determining by generating an alert.

18. The non-transitory computer readable medium according to claim 16 that stores instructions for responding to the determining by attempting to verify whether virtual users of the set represent the suspected or the actual cyber attacker.

19. The non-transitory computer readable medium according to claim 16 that stores instructions for responding to the determining by performing a defensive cyber operation.

20. The non-transitory computer readable medium according to claim 16 that stores instructions for responding to the determining by performing an active cyber operation.

21. The non-transitory computer readable medium according to claim 16 that stores instructions for training the artificial intelligence process with communication parameters of traffic over one or more test communication networks.

22. The non-transitory computer readable medium according to claim 21 wherein at least some of the one or more test communication networks differ from the one or more networks of interest.

23. The non-transitory computer readable medium according to claim 21 wherein at least some of the one or more test communication networks are some of the one or more networks of interest.

24. The non-transitory computer readable medium according to claim 21 wherein the training is executed on traffic that is known to be legitimate or is assumed to be legitimate.

25. The non-transitory computer readable medium according to claim 16 wherein the communication parameters relate to one or more communication protocols.

26. The non-transitory computer readable medium according to claim 16 wherein the communication parameters relate to at least two communication protocols of a communication protocol stack.

27. The non-transitory computer readable medium according to claim 16 wherein the communication parameters comprises at least two out of communication protocol header parameters.

28. The non-transitory computer readable medium according to claim 16 wherein the communication parameters comprises at least some out of an internet protocol (IP) source and destination addresses, one or more routing related variables, IP network packets behavior, and one or more payload data parameter.

29. The non-transitory computer readable medium according to claim 16 wherein the communication parameters comprises at least a majority of an internet protocol (IP) source and destination addresses, one or more routing related variables, IP network packets behavior, and one or more payload data parameter.

30. The non-transitory computer readable medium according to claim 16 wherein the artificial intelligence process is a deep learning process.
